# EUROPEAN PATENT APPLICATION

(11) **EP 3 783 070 A1**
(43) Date of publication of application: **24.02.2021**
(21) Application number: 19192764.9
(22) Date of filing: 21.08.2019
(51) Int. Cl.: C09D 5/00, C09D 133/00

(54) **A WATERBORNE WHITE-BASE COATING**

(71) Applicant: Covestro Deutschland AG, 51373 Leverkusen (DE)
(72) Inventor: LU, Yi, District Shanghai, 200237 (CN); XU, Na, Pudong District Shanghai 201208 (CN); SHI, Guoping, Shenzhen, Guangdong 518112 (CN); YANG, Ling, Pudong, Shanghai 201209 (CN)
(74) Representative: Levpat

(57) **Abstract**

The present invention relates to an aqueous white paint and a preparation method thereof, a coating method and application of the aqueous white paint, as well as a coated product coated with the aqueous white paint. The aqueous white paint comprises a component A and a component B, wherein the component A comprises the following: 30 wt% to 70 wt% of an aqueous UV-curable resin; 0.1 wt% to 5 wt% of a surface photocuring initiator; 1 wt% to 26 wt% of titanium dioxide; optionally an aqueous polymer dispersion; and optionally an additive; and the component B comprises an aliphatic polyisocyanate in an amount of 5 wt% to 15 wt% and optionally a solvent; wherein the above amounts are based on the amount of the aqueous white paint as 100 wt%. The aqueous white paint according to the present invention is less susceptible to yellowing and has good mechanical properties.

## Description

### Technical field

The present invention relates to an aqueous white paint and a preparation method thereof, a coating method and application of the aqueous white paint, as well as a coated product coated with the aqueous white paint.

### Background

The aqueous paint comprising an aqueous ultraviolet (UV)-curable resin contains not only a surface photocuring initiator, but also a deep photocuring initiator. This is because the pigment in the aqueous paint will block the UV light from entering the bottom of the paint, and the surface photocuring initiator is not able to completely cure the bottom of the paint. Therefore, the addition of the deep photocuring initiator can ensure that the bottom of the paint is completely cured to form a coating with good properties, for example, a coating which is not easily cracked, a coating having good adhesion, etc.

CN 106675275 A discloses an aqueous UV-curable matte color paint for air-mixing spraying, comprising a polyurethane acrylate emulsion, a self-drying acrylate emulsion, an aqueous color slurry, fumed silica, a photoinitiator, an additive and water. The color paint is rapidly surface-dried by the self-drying acrylic emulsion to make the matting powder fast fixed, so that the gloss is stable. After the infrared leveling, the polyurethane acrylic emulsion containing unsaturated bonds is cured by UV radiation to undergo a rapid crosslinking reaction initiated by an initiator to increase the hardness of the paint film. The color paint contains a surface photocuring initiator and a relatively high content of a deep photocuring initiator.

CN 104822782 discloses a process for coating substrates, comprising the steps of applying a one-component aqueous base coating composition comprising a first aqueous epoxy acrylate/polyurethane dispersion and a mixture of a second aqueous epoxy acrylate/polyurethane dispersion and an aqueous polyester acrylate/polyurethane dispersion to a substrate; exposing the applied coating composition to UV radiation to simultaneously cure both the base coating composition and the top coating composition. The base coating composition is a pigmented base coating composition, wherein it comprises a relatively high content of a deep photocuring initiator.

US 9505936 discloses an aqueous dispersion comprising an aqueously dispersed resin of hydroxyl-containing polyurethane, an aqueous polyurethane acrylate dispersion, an UV photoinitiator, a pigment with low UV absorption, and water. The aqueous dispersion comprises a relatively high content of a deep photocuring initiator.

CN 101061195 A discloses a coating composition that includes a polymer component containing a latex polymer, a substantially non-irritating ethylenically unsaturated compound, an aqueous polyurethane dispersion, a photoinitiator, and water. The photoinitiator may be a deep photocuring initiator or a surface photocuring initiator.

CN 104540897 discloses a polymer composition comprising a dendritic polymer and one or more of the following: a catalyst, a silane-based curing compound, a polyol, a sterically hindered amine light stabilizer, a UV absorber, a photosensitive initiator, and a solvent comprising at least one hydroxyl functional group. The photosensitive initiator may be a deep photocuring initiator or a surface photocuring initiator.

The deep photocuring initiator in an aqueous paint often causes yellowing of the aqueous paint, especially when the aqueous paint is a white paint.

Therefore, the industry needs an aqueous white paint that not only meets the basic industrial requirements to the performance of a white paint, but also has the advantage of being less susceptible to yellowing.

### Summary of the invention

The term "polyurethane" is also used as a synonym for polyurethaneurea and/or polyurethane polyurea and/or polyurea.

The term "aqueous UV-curable resin" can also be referred to as an aqueous UV resin.

The term "UV-curable resin" is used to refer to a polymer capable of forming a covalently bonded functional group with a chain extender, a crosslinking agent and other polymer molecules upon exposure to ultraviolet (UV) radiation, resulting in a crosslinked polymer network.

The term "surface photocuring initiator" refers to a photocuring initiator which has a main absorption peak at UVB.

The term "deep photocuring initiator" refers to a photocuring initiator which has a main absorption peak at UVA.

The term "without a deep curing initiator" refers to that the deep curing initiator known to those skilled in the art is not actively added to the aqueous white paint.

It is an object of the invention to provide an aqueous white paint and a preparation method thereof, a coating method and application of the aqueous white paint, as well as a coated product coated with the aqueous white paint.

A two-component aqueous white paint according to the present invention comprises a component A and a component B, wherein the component A comprises the following:
a. 30 wt% to 70 wt% of an aqueous UV-curable resin;
b. 0.1 wt% to 5 wt% of a surface photocuring initiator;
c. 1 wt% to 26 wt% of titanium dioxide;
d. optionally an aqueous polymer dispersion; and
e. optionally an additive;
and the component B comprises an aliphatic polyisocyanate in an amount of 5 wt% to 15 wt% and optionally a solvent;
wherein the above amounts are based on the amount of the aqueous white paint as 100 wt%.

According to one aspect of the invention, there is provided a method for producing an aqueous white paint according to the present invention, the method comprising the steps of:
i. mixing the aqueous UV-curable resin (a), the surface photocuring initiator (b), titanium dioxide (c), the optional aqueous polymer dispersion (d) and the optional additive (e) in any manner to obtain the component A;
ii. mixing the aliphatic polyisocyanate and the optional solvent in any manner to obtain the component B; and
iii. mixing the component A and the component B to obtain the aqueous white paint;
wherein step i and step ii are performed in no particular order.

According to one aspect of the invention, there is provided the use of an aqueous white paint according to the present invention for producing a coated product.

According to one aspect of the invention, there is provided a coated product comprising a substrate and a coating formed by applying an aqueous white paint according to the present invention to the substrate and curing.

According to one aspect of the invention, there is provided a method for producing a coated product comprising the steps of: I. applying an aqueous white paint according to the present invention to a substrate; and II. curing the substrate surface coated with the aqueous white paint by UV radiation to form a coating.

The aqueous white paint according to the present invention comprises an aliphatic polyisocyanate and little or no deep photocuring initiator, and the coating formed by curing it is less susceptible to yellowing. Moreover, the aqueous white paint according to the present invention has comparable or better mechanical properties as compared with the conventional aqueous white paint, and therefore can meet the industrial requirements to the performance of an aqueous white paint.

### Detailed description

The present invention provides a two-component aqueous white paint comprising a component A and a component B, wherein the component A comprises the following: 30 wt% to 70 wt% of an aqueous UV-curable resin; 0.1 wt% to 5 wt% of a surface photocuring initiator; 1 wt% to 26 wt% of titanium dioxide; optionally an aqueous polymer dispersion; and optionally an additive; and the component B comprises an aliphatic polyisocyanate in an amount of 5 wt% to 15 wt% and optionally a solvent; wherein the above amounts are based on the amount of the aqueous white paint as 100 wt%. The present invention also provides a preparation method of the aqueous white paint, a coating method and application of the aqueous white paint, as well as a coated product coated with the aqueous white paint.

The aqueous white paint comprises a deep photocuring initiator in an amount of preferably 0 to 0.5 wt%, further preferably 0 to 0.46 wt%, based on the amount of the aqueous white paint as 100 wt%. Most preferably, the aqueous white paint does not comprise a deep photocuring initiator.

### Component A

### Aqueous UV-curable resin

The aqueous UV-curable resin preferably has an amount of 32 wt% to 65 wt%, based on the amount of the aqueous white paint as 100 wt%.

The aqueous UV-curable resin is preferably an aqueous UV-curable polyurethane dispersion.

The aqueous UV-curable polyurethane dispersion preferably has a solid content of 30 wt% to 40 wt%, based on the amount of the aqueous UV-curable polyurethane dispersion as 100 wt%.

The aqueous UV-curable polyurethane dispersion preferably has a viscosity of less than 90 mPa·s, measured at 23 °C in accordance with Standard 2008/105 03 03-98D.

The UV-curable polyurethane dispersion is preferably one or more of the following: Bayhydrol UV 2280 and Bayhydrol UV 2775, and most preferably Bayhydrol UV 2280.

### Surface photocuring initiator

The surface photocuring initiator preferably has an amount of 0.1 wt% to 1.4 wt%, based on the amount of the aqueous white paint as 100 wt%.

The surface photocuring initiator is preferably one or more of the following: benzophenone and α-hydroxyketone.

### Titanium dioxide

The titanium dioxide preferably has an amount of 4 wt% to 23 wt%, based on the amount of the aqueous white paint as 100 wt%.

### Aqueous polymer dispersion

The aqueous polymer dispersion according to the present invention is different from the aqueous UV-curable resin.

The weight ratio of the aqueous UV-curable resin to the aqueous polymer dispersion is preferably from 1:2 to 10:1.

The aqueous polymer dispersion is one or more of the following: an aqueous polyacrylate dispersion and an aqueous polyurethane dispersion, and most preferably an aqueous hydroxyl group-containing polyacrylate dispersion.

The aqueous polymer dispersion preferably has a hydroxyl content of 1 wt% to 5 wt%, based on the solid content of the aqueous polymer dispersion as 100 wt%.

The aqueous polymer dispersion has a viscosity of preferably less than 100 mPa·s, a pH value of preferably 7 to 9, and a glass transition temperature of preferably 80 °C to 90 °C.

The aqueous polymer dispersion preferably has an amount of 0.1 wt% to 40 wt%, and most preferably 5 wt% to 35 wt%, based on the amount of the aqueous white paint as 100 wt%.

### Water

Water may be further added to the aqueous white paint, and it is preferred to use deionized water.

The amount of water is preferably 0.1 wt% to 30 wt%, and most preferably 1.5 wt% to 18 wt%, based on the amount of the aqueous white paint as 100 wt%.

Preferably, water is added to the component A.

### Additive

The additive is preferably one or more of the following: a co-binder, a lubricant, a filler, an anti-settling agent, a defoamer, a wetting agent, a wetting and dispersing agent, a wetting and leveling agent, a rheological agent, an antistatic agent, a film forming assistant, a plasticizer, a neutralizing agent, a catalyst, a thickening agent, a pigment, a dye, a tackifier and a matting agent.

The selection and metering of the additive are in principle known to those skilled in the art and readily measurable.

### Component B

### Aliphatic polyisocyanate

The aliphatic polyisocyanate preferably has a functionality of 2 to 5, and most preferably 2.5 to 3.5.

The aliphatic polyisocyanate is preferably one or more of the following: aliphatic triisocyanates and their derivatives having an iminooxadiazinedione, isocyanurate, uretdione, allophanate, biuret and/or uretdione group.

The aliphatic polyisocyanate is further preferably a trimer based on one or more of the following isocyanates: hexamethylene diisocyanate (HDI), 2,2-dimethylpentane diisocyanate, 2,2,4-trimethylhexane diisocyanate, butylene diisocyanate, 1,3-butadiene-1,4-diisocyanate, 2,4,4-trimethyl-1,6-hexane diisocyanate, 1,6,11-undecane triisocyanate, 1,3,6-hexamethylene triisocyanate, 1,8-diisocyanato-4-methylisocyanato-octane, bis(ethylisocyanato) carbonate and bis(ethylisocyanato) ether, more preferably a trimer based on hexamethylene diisocyanate, and most preferably Bayhydur XP 2655.

The aliphatic polyisocyanate has an isocyanate group content of preferably 15 wt% to 25 wt%, a viscosity of preferably 3000 mPa·s to 4000 mPa·s, and a number average molecular weight of preferably 600 g/mol to 800 g/mol.

The aliphatic polyisocyanate most preferably has an amount of 6 wt% to 12 wt%, based on the amount of the aqueous white paint as 100 wt%.

### Solvent

The solvent is that capable of dissolving the aliphatic polyisocyanate therein.

The solvent is preferably propylene glycol methyl ether acetate.

The concentration of the aliphatic polyisocyanate in the solvent is preferably from 60% to 80%.

### Method for producing an aqueous white paint

When water is further added to the aqueous white paint, the method for producing an aqueous white paint according to the present invention comprises the steps of:
i. mixing the aqueous UV-curable resin (a), the surface photocuring initiator (b), titanium dioxide (c), the optional aqueous polymer dispersion (d) and the optional additive (e) in any manner to obtain the component A;
ii. mixing the aliphatic polyisocyanate and the optional solvent in any manner to obtain the component B; and
iii. mixing the component A and the component B to obtain the aqueous white paint;
wherein step i and step ii are performed in no particular order.

Titanium dioxide may be pre-mixed with a portion of the additive to form a white slurry, and then mixed with the aqueous UV-curable resin, the surface photocuring initiator, the optional water, the optional aqueous polymer dispersion and the optional additive present in the component A to obtain the component A.

Step i and step ii can be performed simultaneously, in an order of first step i and then step ii, or in an order of first step ii and then step i.

The component A and the component B are preferably stored separately and mixed prior to use.

### Coated product

The substrate is preferably wood, plastic, metal, glass, fabric, leather, paper, EVA, rubber, dermis, glass fiber, polymer fiber or graphite fiber.

The coating is preferably spraying, painting, roll coating, dip coating, injection, printing or blade coating, and most preferably spraying, for example, air spraying, airless spraying or electrostatic spraying.

The coated product is preferably a piece of furniture or a floor.

### Method for producing a coated product

The coating may be performed one or more times, and the coating composition applied each time may be the same or different.

### Examples

All technical and scientific terms used herein have the same meaning as commonly understood by those skilled in the art to which the present invention belongs, unless otherwise defined. When the definition of a term in the present description conflicts with the meaning as commonly understood by those skilled in the art to which the present invention belongs, the definition described herein shall apply.

All numerical values expressing amount of ingredients, reaction conditions and the like which are used in the description and claims are to be understood as being modified by the term "about", unless otherwise specified. Accordingly, unless indicated to the contrary, the numerical values and parameters described herein are approximate values which can be varied according to the desired performance obtained as required.

The term "and/or" used herein refers to one or all of the elements mentioned.

The terms "containing", "including" and "comprising" used herein cover both the case that there are only the elements mentioned and the case that there are also other elements unmentioned in addition to the elements mentioned.

All percentages in the present invention refer to weight percentage, unless otherwise specified.

The analysis and measurement in the present invention were carried out at 23 °C, unless otherwise specified.

The weight of each aqueous dispersion in the present invention refers to the aqueous weight, unless otherwise specified.

The number average molecular weight was determined at 23 °C by gel permeation chromatography using tetrahydrofuran as a mobile phase and the polystyrene standard.

The solid content of the dispersion was determined in accordance with DIN-EN ISO 3251.

The isocyanate group (NCO) content was determined according to DIN-EN ISO 11909 and the measured data includes both free and potentially free NCO contents.

The isocyanate functionality was determined according to GPC.

The viscosity of the aqueous polymer dispersion or polyisocyanate is measured according to DIN EN ISO 3219/A.3 at 23 °C.

The pH value of the dispersion was measured at 23 °C using a PB-10 pH meter from Sartorius, Germany.

The glass transition temperature (Tg) was measured by differential scanning calorimetry using Auto Q 20-type DSC from TA Company at a heating rate of 10 °C/min.

The hydroxyl value is determined in accordance with ASTM D4274.

**Raw materials and reagents**

| | |
|---|---|
| Bayhydrol UV 2280 | Aqueous UV-curable polyurethane dispersion, available from Covestro Germany. |
| Bayhydrol A 2427 | Hydroxyl-containing polyacrylate dispersion having a hydroxyl content of about 2.0 wt% (calculated on basis of the solid content), a nonvolatile content of about 42%, a viscosity of about 80 mPa· s (at 23 °C), a density of about 1.1 g/cm³ (at 20 °C), a pH value of about 7.7 (1:3 in deionized water), a glass transition temperature of about +88 °C, available from Covestro Co., Ltd. |
| Bayhudur XP 2655 | HDI-based aliphatic trimer having an NCO-group content of 20.8 wt%, a viscosity of about 3500 mPa·s (23 °C), a solid content of 100 wt%, an isocyanate functionality of 3.2, a number average molecular weight of 700 g/mol, available from Covestro Co., Ltd. |
| Omnirad 500 | α-hydroxyketone, a surface photocuring initiator, available from IGM. |
| Omnirad 819DW | Phenyl bis(2,4,6-trimethylbenzoyl)phosphine oxide, a deep photocuring initiator, available from IGM. |
| BYK022 | A mixture of hydrophobic solid particles in a foam-destroying polysiloxane and a polyglycol, a defoamer, available from BYK, Germany. |
| DISPER BYK-190 | Solution of a high molecular weight block copolymer with pigment affinic groups, a wetting and dispersing agent, available from BYK, Germany. |
| TEGO® Airex 902W | Polyether siloxane copolymer containing fumed silica, a defoamer, available from Evonik Industries Group. |
| R706 | Titanium dioxide, a pigment filler, available from Chemours Company. |
| EnviroGem AD 01 | Acetylene glycol surfactant, a wetting and leveling agent, available from Evonik Industries Group. |
| BYK 348 | Polyether modified siloxane, a wetting agent, available from BYK, Germany. |
| ACRYSOL RM 5000 | A rheology agent, available from Dow Chemical, USA. |
| ACRYSOL RM 8W | A rheology agent, available from Dow Chemical, USA. |
| Dehydran 1293 | Silicone, a defoamer, available from BASF. |
| BYK 3455 | Polyether modified siloxane, a wetting agent, available from BYK, Germany. |

### Preparation of Aqueous White Paints in Comparative Examples 1-4

The components according to Table 1 were mixed and stirred at a speed of 2,500 rpm for 60 minutes to obtain a white slurry; the compositions of the components A shown in Tables 2-7 were mixed and stirred at a speed of 1,500 rpm for 5-20 minutes; and the prepared white slurry was added and stirred at a speed of 1000 rpm for 5-20 minutes to obtain the aqueous white paints in the comparative examples.

### Preparation of Aqueous White Paints in Comparative Examples 5-8 and Examples 1-13

The components according to Table 1 were mixed and stirred at a speed of 2,500 rpm for 60 minutes to obtain a white slurry; the components of the components A shown in Tables 2-7 were mixed and stirred at a speed of 1,500 rpm for 5-20 minutes; and the prepared white slurry was added and stirred at a speed of 1000 rpm for 5-20 minutes, and the components B shown in Tables 2-7 were added and stirred at 1500 rpm for 5 minutes to obtain the aqueous white paints in the inventive examples and the comparative examples.

**Table 1: Composition of the white slurry**

| White slurry composition | Content based on 100 wt% of the white slurry / % |
|---|---|
| BYK190 | 6.9 |
| BYK022 | 0.8 |
| EnviroGem AD01 | 2.7 |
| BYK348 | 0.5 |
| Deionized water | 19.8 |
| R706 | 68.8 |
| ACRYSOL RM5000 | 0.5 |

### Test Methods

### 1. Pencil hardness

The aqueous white paint was blade-coated on a glass plate with a 120 µm wet film preparation machine, dried at 50 °C for 30 minutes, and then cured using a mercury lamp and a gallium lamp under conditions of 120 W/cm and 4 m/min, and aged at 23 °C ± 1 °C for 7 days. The pencil hardness was tested according to GB/T 6739, and a hardness of higher than HB is qualified.

### 2. Stain resistance (measured according to GB/T 23999-2009)

The aqueous white paint was sprayed on a black walnut substrate twice with the amount sprayed each time being 120 g/m². For each layer of coating, dried at 50 °C for 30 minutes, and then cured using a mercury lamp and a gallium lamp under conditions of 120 W/cm and 4 m/min, and aging at 23 °C ± 1 °C for 7 days to obtain a sample plate for test. The sample plate was tested in terms of alkali resistance, alcohol resistance, vinegar resistance, red wine resistance, green tea resistance, coffee resistance, hot water resistance and water resistance, and rated. Ratings 0-5 are from poor to good appearance in order, with the worst appearance rated as 0 and the unchanged appearance as 5. The appearance having a rating of 5 is qualified.

### 2.1 Alkali resistance test

5 pieces of filter paper having a diameter of about 1 cm were immersed in a test solution (50 g/L of NaHCO₃) for 30 seconds, and the filter paper was placed on the sample plate. The appearance of the sample plate was observed and rated respectively after 5 minutes and 1 hour, and the two groups of data were recorded in Tables 2-7.

### 2.2 Alcohol resistance

5 pieces of filter paper having a diameter of about 1 cm were immersed in a test solution (50% ethanol solution (volume concentration)) for 30 seconds, and the filter paper was placed on the sample plate. The appearance of the sample plate was observed and rated respectively after 5 minutes and 1 hour, and the two groups of data were recorded in Tables 2-7.

### 2.3 Vinegar resistance

5 pieces of filter paper having a diameter of about 1 cm were immersed in a test solution (brewed vinegar) for 30 seconds, and the filter paper was placed on the sample plate. The appearance of the sample plate was observed and rated respectively after 5 minutes and 1 hour, and the two groups of data were recorded in Tables 2-7.

### 2.4 Red wine resistance

5 pieces of filter paper having a diameter of about 1 cm were immersed in a test solution (dry red wine, Great Wall) for 30 seconds, and the filter paper was placed on the sample plate. The appearance of the sample plate was observed and rated respectively after 5 minutes and 1 hour, and the two groups of data were recorded in Tables 2-7.

### 2.5 Green tea resistance

2 g of green tea was added to 250 ml of boiling water, and left at room temperature for 5 minutes. Then, 5 pieces of filter paper having a diameter of about 1 cm were immersed in the green tea water for 30 seconds, and the filter paper was placed on the sample plate. The appearance of the sample plate was observed and rated respectively after 5 minutes and 1 hour, and the two groups of data were recorded in Tables 2-7.

### 2.6 Coffee resistance

4 g of coffee was added to 100 ml of boiling water, and left at room temperature for 5 minutes. Then, 5 pieces of filter paper having a diameter of about 1 cm were immersed in the coffee for 30 seconds, and the filter paper was placed on the sample plate. The appearance of the sample plate was observed and rated respectively after 5 minutes and 1 hour, and the two groups of data were recorded in Tables 2-7.

### 2.7 Hot water resistance

5 pieces of filter paper having a diameter of about 1 cm were immersed in boiling water for 30 seconds, and the filter paper was placed on the sample plate. The appearance of the sample plate was observed and rated respectively after 5 minutes and 1 hour, and the two groups of data were recorded in Tables 2-7.

### 2.8 Water resistance

5 pieces of filter paper having a diameter of about 1 cm were immersed in water at room temperature for 30 seconds, and the filter paper was placed on the sample plate. The appearance of the sample plate was observed and rated respectively after 5 minutes and 1 hour, and the two groups of data were recorded in Tables 2-7.

### 3. Abrasion resistance

The aqueous white paint was blade-coated on an aluminum plate with a 120 µm coating rod, dried at 50 °C for 30 minutes, and then cured using a mercury lamp and a gallium lamp under conditions of 120 W/cm and 4 m/min, and aging at 23 °C ± 1 °C for 7 days. It was tested according to GB/T 1768 using a CS10-type rubber wheel with a load weight of 1 kg, and a loss of less than 30 mg is qualified.

### 4. Impact resistance

The aqueous white paint was blade-coated on an tin plate with a 120 µm coating rod, dried at 50 °C for 30 minutes, and then cured using a mercury lamp and a gallium lamp under conditions of 120 W/cm and 4 m/min, and aging at 23 °C ± 1 °C for 7 days. It was tested according to GB/T 20624.2, and a measured value of greater than 50 cm is regarded as qualified in term of impact resistance. The larger the measured value is, the better is the impact resistance.

### 5. Flexibility

The aqueous white paint was blade-coated on an tin plate with a 120 µm coating rod, dried at 50 °C for 30 minutes, and then cured using a mercury lamp and a gallium lamp under conditions of 120 W/cm and 4 m/min, and aging at 23 °C ± 1 °C for 7 days, and then tested.

### 6. Hue

The aqueous white paint was sprayed on a white melamine plate (spraying thickness: 120 g/m²), dried at 50 °C for 30 minutes, and then cured using a mercury lamp and a gallium lamp under conditions of 120 W/cm and 4 m/min. If it was desired to spray two or three layers, the above steps were repeated once or twice so as to obtain a two-layer coating or a three-layer coating. L-, A-, and B-values of the coating were tested with a color difference meter. The smaller the B-value is, the weaker is the yellow phase of the coating, i.e., the less susceptible the coating is to yellowing.

The above performance indexes in terms of pencil hardness, stain resistance, abrasion resistance, impact resistance and flexibility reflect the mechanical properties of the coating.

### Examples (Ex) and Comparative Examples (CE)

Table 2 lists the composition and the performance test results of the aqueous white paints in Example 1 and Comparative Example 1.

**Table 2: Composition and performance test results of the aqueous white paints in Example 1 and Comparative Example 1**

| Aqueous white paint composition / wt% | CE 1 | Ex 1 |
|---|---|---|
| Component A / g | | |
| Bayhydrol UV 2280 | 71.0 | 71.0 |
| Dehydran 1293 | 0.56 | 0.56 |
| TEGO® Airex 902W | 0.56 | 0.56 |
| BYK 3455 | 0.56 | 0.56 |
| White slurry | 7.2 | 7.2 |
| ACRYSOL RM 8W | 0.67 | 0.67 |
| Omnirad 500 | 1.0 | 1.0 |
| Omnirad 819DW | 1.0 | |
| Deionized water | 17.45 | 18.45 |

| Component B / g | | |
|---|---|---|
| Bayhudur XP 2655 dissolved in propylene glycol methyl ether acetate solvent at a concentration of 70% | | 10.0 |

| Performance Tests | | |
|---|---|---|
| Pencil hardness | H | H |
| Stain resistance-alkali resistance (5 min/1 h) | 5/5 | 5/5 |
| Stain resistance-alcohol resistance (5 min/1 h) | 5/5 | 5/5 |
| Stain resistance-vinegar resistance (5 min/1 h) | 5/5 | 5/5 |
| Stain resistance-green tea resistance (5 min/1 h) | 5/5 | 5/5 |
| Stain resistance-coffee resistance (5 min/1 h) | 5/5 | 5/5 |
| Stain resistance-red wine resistance (5 min/1 h) | 5/5 | 5/5 |
| Stain resistance-hot water resistance (5 min/1 h) | 5/5 | 5/5 |
| Stain resistance-water resistance (5 min/1 h) | 5/5 | 5/5 |
| Abrasion resistance / mg | 13.4 | 9.1 |
| Impact resistance / cm | 20 | 100 |
| Flexibility / mm | 1 | 1 |

In Table 2, Comparative Example 1 is a conventional aqueous white paint formulation, and Example 1 is a two-component aqueous white paint formulation according to the present invention. It can be seen that the aqueous white paint according to the present invention can achieve mechanical properties comparable to those of the conventional white paint, and the aqueous white paint according to the present invention has better abrasion resistance and impact resistance than the conventional white paint.

**Table 3: Composition and performance test results of the aqueous white paints in Examples 2-3 and Comparative Examples 2-5**

| Aqueous white paint composition / wt% | CE 2 | Ex 2 | CE 3 | Ex 3 | CE 4 | CE 5 |
|---|---|---|---|---|---|---|
| Component A / g | | | | | | |
| Bayhydrol UV 2280 | 71.0 | 71.0 | 59.0 | 59.0 | 52.3 | 53.3 |
| Dehydran 1293 | 0.56 | 0.56 | 0.56 | 0.56 | 0.56 | 0.56 |
| TEGO® Airex 902W | 0.56 | 0.56 | 0.56 | 0.56 | 0.56 | 0.56 |
| BYK 3455 | 0.56 | 0.56 | 0.56 | 0.56 | 0.56 | 0.56 |
| White slurry | 21.6 | 21.6 | 36.0 | 36.0 | 43.3 | 43.3 |
| ACRYSOL RM 8W | 0.67 | 0.67 | 0.67 | 0.67 | 0.72 | 0.72 |
| Omnirad 500 | 1.0 | 1.0 | 1.0 | 1.0 | 1.0 | 1.0 |
| Omnirad 819DW | 1.0 | | 1.0 | | 1.0 | |
| Deionized water | 3.05 | 4.05 | 0.65 | 1.65 | | |

| Component B / g | | | | | | |
|---|---|---|---|---|---|---|
| Bayhudur XP 2655 dissolved in propylene glycol methyl ether acetate solvent at a concentration of 70% | | 10.0 | | 10.0 | | 10.0 |

| Performance Tests | | | | | | |
|---|---|---|---|---|---|---|
| Pencil hardness | H | H | H | F | HB | F |
| Stain resistance-alkali resistance (5 min/1 h) | 5/5 | 5/5 | 5/5 | 5/5 | 5/5 | 5/5 |
| Stain resistance-alcohol resistance (5 min/1 h) | 5/5 | 5/5 | 5/5 | 5/5 | 5/5 | 5/5 |
| Stain resistance-vinegar resistance (5 min/1 h) | 5/5 | 5/5 | 5/5 | 5/5 | 5/5 | 5/5 |
| Stain resistance-green tea resistance (5 min/1 h) | 5/5 | 5/5 | 5/5 | 5/5 | 5/5 | 5/5 |
| Stain resistance-coffee resistance (5 min/1 h) | 5/5 | 5/5 | 5/5 | 5/5 | 5/5 | 4/4 |
| Stain resistance-red wine resistance (5 min/1 h) | 5/5 | 5/5 | 5/5 | 5/5 | 5/5 | 5/5 |
| Stain resistance-hot water resistance (5 min/1 h) | 5/5 | 5/5 | 5/5 | 5/5 | 5/5 | 5/5 |
| Stain resistance-water resistance (5 min/1 h) | 5/5 | 5/5 | 5/5 | 5/5 | 5/5 | 5/5 |
| Abrasion resistance / mg | 46.6 | 28.6 | 39.4 | 27.5 | 112.5 | 40.5 |
| Impact resistance / cm | 20 | 100 | 20 | 100 | 50 | 100 |
| Flexibility / mm | 1 | 1 | 1 | 1 | 1 | 1 |

In Table 3, Comparative Examples 2-4 are conventional aqueous white paint formulations, and Examples 2-3 are two-component aqueous white paint formulations according to the present invention. It can be seen that the aqueous white paints according to the present invention can achieve mechanical properties comparable to those of the conventional white paints, and the aqueous white paints according to the present invention have better abrasion resistance and impact resistance than the conventional white paints.

When comparing Examples 2-3 with Comparative Example 5, it can be seen that the stain resistance-coffee resistance and the abrasion resistance of the aqueous white paint decrease when the amount of titanium dioxide exceeds 26 wt%, and the coating formed by this aqueous white paint cannot meet the requirements.

**Table 4: Composition and performance test results of the aqueous white paints in Examples 1-6 and Comparative Examples 1-3**

| Aqueous white paint composition / wt% | CE 1 | Ex 4 | Ex 1 | CE 2 | Ex 5 | Ex 2 | CE 3 | Ex 6 | Ex 3 |
|---|---|---|---|---|---|---|---|---|---|
| Component A / g | | | | | | | | | |
| Bayhydrol UV 2280 | 71.0 | 71.0 | 71.0 | 71.0 | 71.0 | 71.0 | 59.0 | 59.0 | 59.0 |
| Dehydran 1293 | 0.56 | 0.56 | 0.56 | 0.56 | 0.56 | 0.56 | 0.56 | 0.56 | 0.56 |
| TEGO® Airex 902W | 0.56 | 0.56 | 0.56 | 0.56 | 0.56 | 0.56 | 0.56 | 0.56 | 0.56 |
| BYK 3455 | 0.56 | 0.56 | 0.56 | 0.56 | 0.56 | 0.56 | 0.56 | 0.56 | 0.56 |
| White slurry | 7.2 | 7.2 | 7.2 | 21.6 | 21.6 | 21.6 | 36.0 | 36.0 | 36.0 |
| ACRYSOL RM 8W | 0.67 | 0.67 | 0.67 | 0.67 | 0.67 | 0.67 | 0.67 | 0.67 | 0.67 |
| Omnirad 500 | 1.0 | 1.0 | 1.0 | 1.0 | 1.0 | 1.0 | 1.0 | 1.0 | 1.0 |
| Omnirad 819DW | 1.0 | 0.5 | | 1.0 | 0.5 | | 1.0 | 0.5 | |
| Deionized water | 17.45 | 17.95 | 18.45 | 3.05 | 3.55 | 4.05 | 0.65 | 1.82 | 1.65 |

| Component B / g | | | | | | | | | |
|---|---|---|---|---|---|---|---|---|---|
| Bayhudur XP 2655 dissolved in propylene glycol methyl ether acetate solvent at a concentrat ion of 70% | | 10.0 | 10.0 | | 10.0 | 10.0 | | 10.0 | 10.0 |

| Performance Tests | | | | | | | | | |
|---|---|---|---|---|---|---|---|---|---|
| Effect when spraying one layer | | | | | | | | | |
| L | 94.51 | 93.89 | 94.56 | 95.83 | 96.43 | 95.84 | 96.84 | 96.88 | 96.4 |
| A | -0.83 | -0.82 | -0.57 | -0.64 | -0.53 | -0.45 | -0.74 | -0.57 | -0.46 |
| B | 4.53 | 4.02 | 3.86 | 3.24 | 3.1 | 2.88 | 3.47 | 3.13 | 2.77 |
| Ratio of the decrease in B-value | | 11.26% | 14.79% | | 4.32% | 11.11% | | 9.80% | 20.17% |

| Effect when spraying two layers | | | | | | | | | |
|---|---|---|---|---|---|---|---|---|---|
| L | 95.55 | 95.16 | 94.75 | 97.04 | 97.29 | 95.53 | 97.37 | 97.76 | 97.65 |
| A | -0.87 | -0.67 | -0.61 | -0.8 | -0.56 | -0.42 | -0.75 | -0.57 | -0.42 |
| B | 4.38 | 4.05 | 3.79 | 3.51 | 3.22 | 2.92 | 3.39 | 3.19 | 2.87 |
| Ratio of the decrease in B-value | | 7.53% | 13.47% | | 8.26% | 16.81% | | 5.90% | 15.34% |

| Effect when spraying three layers | | | | | | | | | |
|---|---|---|---|---|---|---|---|---|---|
| L | 96.22 | 95.99 | 95.87 | 97.69 | 97.67 | 97.31 | 98.1 | 98.09 | 97.88 |
| A | -0.95 | -0.67 | -0.58 | -0.81 | -0.57 | -0.42 | -0.81 | -0.59 | -0.47 |
| B | 4.43 | 3.69 | 3.62 | 3.72 | 3.34 | 2.9 | 3.86 | 3.45 | 3.14 |
| Ratio of the decrease in B-value | | 16.70% | 18.28% | | 10.22% | 22.04% | | 10.62% | 18.65% |

In Table 4, Comparative Examples 1-3 are conventional aqueous white paint formulations, and Examples 1-6 are two-component aqueous white paint formulations according to the present invention. It can be seen that the B-values of the coatings formed by the aqueous white paints according to the present invention are much smaller than those of the coatings formed by the conventional aqueous white paints, that is, the yellow phase of the coatings according to the present invention is weaker than that of the conventional coatings, indicating that the coatings according to the present invention are less susceptible to yellowing than the conventional coatings and can meet the industrial requirements.

When comparing Examples 4 and 1, Comparative Examples 5 and 2, and Comparative Examples 6 and 3, it can be seen that the B-values of the coatings formed by the aqueous white paints without a deep photocuring initiator is much smaller than those of the coatings formed by the aqueous white paints with a small amount of a deep photocuring initiator, that is, the coatings formed by the aqueous white paints without a deep photocuring initiator have a relatively weak yellow phase, indicating that these coatings are less susceptible to yellowing.

**Table 5: Composition and performance test results of the aqueous white paints in Examples 1, 7-9 and Comparative Examples 1, 6-7**

| Aqueous white paint composition / wt% | CE 1 | Ex 1 | Ex 7 | Ex 8 | Ex 9 | CE 6 | CE 7 |
|---|---|---|---|---|---|---|---|
| Component A / g | | | | | | | |
| Bayhydrol UV 2280 | 71.0 | 71.0 | 64.0 | 50.0 | 35.5 | 21.0 | 7.0 |
| Bayhydrol A 2427 | | | 7.0 | 21.0 | 35.5 | 50.0 | 64.0 |
| Dehydran 1293 | 0.56 | 0.56 | 0.56 | 0.56 | 0.56 | 0.56 | 0.56 |
| TEGO® Airex 902W | 0.56 | 0.56 | 0.56 | 0.56 | 0.56 | 0.56 | 0.56 |
| BYK 3455 | 0.56 | 0.56 | 0.56 | 0.56 | 0.56 | 0.56 | 0.56 |
| White slurry | 7.2 | 7.2 | 7.2 | 7.2 | 7.2 | 7.2 | 7.2 |
| ACRYSOL RM 8W | 0.67 | 0.67 | 0.67 | 0.67 | 0.67 | 1.0 | 1.0 |
| Omnirad 500 | 1.0 | 1.0 | 1.0 | 1.0 | 1.0 | 1.0 | 1.0 |
| Omnirad 819DW | 1.0 | | | | | | |
| Deionized water | 17.45 | 18.45 | 18.45 | 18.45 | 18.45 | 18.45 | 18.45 |

| Component B / g | | | | | | | |
|---|---|---|---|---|---|---|---|
| Bayhudur XP 2655 dissolved in propylene glycol methyl ether acetate solvent at a concentration of 70% | | 10.0 | 10.0 | 10.0 | 10.0 | 10.0 | 10.0 |

| Performance Tests | | | | | | | |
|---|---|---|---|---|---|---|---|
| Pencil hardness | H | H | 2H | 2H | 2H | 2H | H |
| Stain resistance-alkali resistance (5 min/1 h) | 5/5 | 5/5 | 5/5 | 5/5 | 5/5 | 5/5 | 5/5 |
| Stain resistance-alcohol resistance (5 min/1 h) | 5/5 | 5/5 | 5/5 | 5/5 | 5/5 | 5/5 | 5/5 |
| Stain resistance-vinegar resistance (5 min/1 h) | 5/5 | 5/5 | 5/5 | 5/5 | 5/5 | 5/5 | 5/5 |
| Stain resistance-green tea resistance (5 min/1 h) | 5/5 | 5/5 | 5/5 | 5/5 | 5/5 | 5/5 | 5/5 |
| Stain resistance-coffee resistance (5 min/1 h) | 5/5 | 5/5 | 5/5 | 5/5 | 5/5 | 5/5 | 5/5 |
| Stain resistance-red wine resistance (5 min/1 h) | 5/5 | 5/5 | 5/5 | 5/5 | 5/5 | 5/5 | 5/5 |
| Stain resistance-hot water resistance (5 min/1 h) | 5/5 | 5/5 | 5/5 | 5/5 | 5/5 | 5/5 | 5/5 |
| Stain resistance-water resistance (5 min/1 h) | 5/5 | 5/5 | 5/5 | 5/5 | 5/5 | 5/5 | 5/5 |
| Abrasionresistance / mg | 13.4 | 9.1 | 4.1 | 15.6 | 27.1 | 34.9 | 34.6 |
| Impact resistance / cm | 20 | 100 | 100 | 100 | 100 | 100 | 100 |
| Flexibility / mm | 1 | 1 | 1 | 1 | 1 | 1 | 1 |

In Table 5, Examples 1 and 7-9 comprise no more than 40 wt% of the aqueous polyacrylate dispersion. When compared with the conventional white paint of Comparative Example 1, the aqueous white paints according to the present invention can achieve mechanical properties comparable to those of the conventional white paint, and the aqueous white paints according to the present invention have better abrasion resistance and impact resistance than the conventional white paint.

As can be seen from Comparative Examples 6-7, the coatings formed by the aqueous white paints having more than 40 wt% of the aqueous polyacrylate dispersion exhibit worse abrasion resistance.

As can be seen from Examples 1 and 7-9, the coatings formed by the aqueous white paints having a suitable amount of the aqueous polyacrylate dispersion exhibit an improved pencil hardness and good stain resistance, abrasion resistance, impact resistance and flexibility.

**Table 6: Composition and performance test results of the aqueous white paints in Examples 10-11 and Comparative Examples 1, 8.**

| Aqueous white paint composition / wt% | CE 1 | Ex 10 | CE 8 |
|---|---|---|---|
| Component A / g | | | |
| Bayhydrol UV 2280 | 71.0 | 64.0 | 64.0 |
| Bayhydrol A 2427 | | 7.0 | 7.0 |
| Dehydran 1293 | 0.56 | 0.56 | 0.56 |
| TEGO® Airex 902W | 0.56 | 0.56 | 0.56 |
| BYK 3455 | 0.56 | 0.56 | 0.56 |
| White slurry | 7.2 | 7.2 | 7.2 |
| ACRYSOL RM 8W | 0.67 | 0.67 | 0.67 |
| Omnirad 500 | 1.0 | 1.0 | 1.0 |
| Omnirad 819DW | 1.0 | | |
| Deionized water | 17.45 | 18.45 | 18.45 |

| Component B / g | | | |
|---|---|---|---|
| Bayhudur XP 2655 dissolved in propylene glycol methyl ether acetate solvent at a concentration of 70% | | 20.0 | 30.0 |

| Performance Tests | | | |
|---|---|---|---|
| Pencil hardness | H | 2H | H |
| Stain resistance-alkali resistance (5 min/1 h) | 5/5 | 5/5 | 5/5 |
| Stain resistance-alcohol resistance (5 min/1 h) | 5/5 | 5/5 | 5/5 |
| Stain resistance-vinegar resistance (5 min/1 h) | 5/5 | 5/5 | 5/5 |
| Stain resistance-green tea resistance (5 min/1 h) | 5/5 | 5/5 | 5/5 |
| Stain resistance-coffee resistance (5 min/1 h) | 5/5 | 5/5 | 4/4 |
| Stain resistance-red wine resistance (5 min/1 h) | 5/5 | 5/5 | 5/5 |
| Stain resistance-hot water resistance (5 min/1 h) | 5/5 | 5/5 | 5/5 |
| Stain resistance-water resistance (5 min/1 h) | 5/5 | 5/5 | 5/5 |
| Abrasion resistance / mg | 13.4 | 11.7 | 8.9 |
| Impact resistance / cm | 20 | 100 | 100 |
| Flexibility / mm | 1 | 1 | 1 |

As can be seen from Comparative Example 8, the coating formed by the aqueous white paint having an aliphatic polyisocyanate content reaching 16 wt% cannot meet the requirement in term of stain resistance-coffee resistance.

**Table 7: Composition and performance test results of the aqueous white paints in Examples 10-11 and Comparative Examples 1, 8.**

| Aqueous white paint composition / wt% | CE 1 | Ex 12 | Ex 13 |
|---|---|---|---|
| Component A / g | | | |
| Bayhydrol UV 2280 | 71.0 | 71.0 | 71.0 |
| Dehydran 1293 | 0.56 | 0.56 | 0.56 |
| TEGO® Airex 902W | 0.56 | 0.56 | 0.56 |
| BYK 3455 | 0.56 | 0.56 | 0.56 |
| White slurry | 7.2 | 7.2 | 7.2 |
| ACRYSOL RM 8W | 0.67 | 0.67 | 0.67 |
| Omnirad 500 | 1.0 | 0.2 | 1.5 |
| Omnirad 819DW | 1.0 | | |
| Deionized water | 17.45 | 19.25 | 17.95 |

| Component B / g | | | |
|---|---|---|---|
| Bayhudur XP 2655 dissolved in propylene glycol methyl ether acetate solvent at a concentration of 70% | | 10.0 | 10.0 |

| Performance Tests | | | |
|---|---|---|---|
| Pencil hardness | H | H | H |
| Stain resistance-alkali resistance (5 min/1 h) | 5/5 | 5/5 | 5/5 |
| Stain resistance-alcohol resistance (5 min/1 h) | 5/5 | 5/5 | 5/5 |
| Stain resistance-vinegar resistance (5 min/1 h) | 5/5 | 5/5 | 5/5 |
| Stain resistance-green tea resistance (5 min/1 h) | 5/5 | 5/5 | 5/5 |
| Stain resistance-coffee resistance (5 min/1 h) | 5/5 | 5/5 | 5/5 |
| Stain resistance-red wine resistance (5 min/1 h) | 5/5 | 5/5 | 5/5 |
| Stain resistance-hot water resistance (5 min/1 h) | 5/5 | 5/5 | 5/5 |
| Stain resistance-water resistance (5 min/1 h) | 5/5 | 5/5 | 5/5 |
| Abrasion resistance / mg | 13.4 | 6.8 | 5.5 |
| Impact resistance / cm | 20 | 100 | 100 |
| Flexibility / mm | 1 | 1 | 1 |

When compared with the conventional aqueous white paint in Comparative Example 1, the coatings formed by the aqueous white paints in Examples 12 and 13 have good mechanical properties, and better abrasion resistance and impact resistance than the conventional aqueous white paint.

It is apparent to those skilled in the art that the present invention is not limited to the specific details described above, and may be embodied in other specific forms without departing from the spirit or essential characteristics according to the present invention. The Examples are to be considered in all respects as illustrative but not restrictive, so that the scope according to the present invention is defined by the claims rather than the foregoing description. Thus, any change, as long as it belongs to the meaning and range of equivalents of the claims, should be considered as part of this invention.

## Claims

1. A two-component aqueous white paint, comprising a component A and a component B, wherein the component A comprises the following:
a. 30 wt% to 70 wt% of an aqueous UV-curable resin;
b. 0.1 wt% to 5 wt% of a surface photocuring initiator;
c. 1 wt% to 26 wt% of titanium dioxide;
d. optionally an aqueous polymer dispersion; and
e. optionally an additive;
and the component B comprises an aliphatic polyisocyanate in an amount of 5 wt% to 15 wt% and optionally a solvent;
wherein the above amounts are based on the amount of the aqueous white paint as 100 wt%.

2. The aqueous white paint according to claim 1, **characterized in that** the aqueous white paint comprises a deep photocuring initiator in an amount of 0 to 0.5 wt%, based on the amount of the aqueous white paint as 100 wt%.

3. The aqueous white paint according to claim 1 or 2, **characterized in that** the aqueous UV-curable resin is an aqueous UV-curable polyurethane dispersion.

4. The aqueous white paint according to any one of claims 1 to 3, **characterized in that** the aqueous polymer dispersion has an amount of 0.1 wt% to 40 wt%, based on the amount of the aqueous white paint as 100 wt%.

5. The aqueous white paint according to any one of claims 1 to 4, **characterized in that** the weight ratio of the aqueous UV-curable resin to the aqueous polymer dispersion is from 1:2 to 10:1.

6. The aqueous white paint according to any one of claims 1 to 5, **characterized in that** the aqueous polymer dispersion is one or more of the following: an aqueous polyacrylate dispersion and an aqueous polyurethane dispersion.

7. The aqueous white paint according to any one of claims 1 to 6, **characterized in that** the aqueous polymer dispersion is a hydroxyl group-containing polyacrylate dispersion.

8. The aqueous white paint according to any one of claims 1 to 7, **characterized in that** the aliphatic polyisocyanate is one or more of the following: aliphatic triisocyanates and their derivatives containing an iminooxadiazinedione, isocyanurate, uretdione, allophanate, biuret and/or uretdione group.

9. The aqueous white paint according to any one of claims 1 to 8, **characterized in that** the aliphatic polyisocyanate has an amount of 6 wt% to 12 wt%, based on the amount of the aqueous white paint as 100 wt%.

10. A method for producing an aqueous white paint according to any one of claims 1 to 9, **characterized in that** it comprises the steps of:
i. mixing the aqueous UV-curable resin (a), the surface photocuring initiator (b), titanium dioxide (c), the optional aqueous polymer dispersion (d) and the optional additive (e) in any manner to obtain the component A;
ii. mixing the aliphatic polyisocyanate and the optional solvent in any manner to obtain the component B; and
iii. mixing the component A and the component B to obtain the aqueous white paint; wherein step i and step ii are performed in no particular order.

11. Use of an aqueous white paint according to any one of claims 1 to 9 for producing a coated product.

12. A coated product, comprising a substrate and a coating formed by applying an aqueous white paint according to any one of claims 1 to 9 to the substrate and curing.

13. The coated product according to claim 12, **characterized in that** the coated product is a piece of furniture or a floor.

14. A method for producing a coated product, comprising the steps of:
I. applying an aqueous white paint according to any one of claims 1 to 9 to a substrate; and
II. curing the substrate surface coated with the aqueous white paint by UV radiation to form a coating.
